Europäisches Patentamt

European Patent Office

Office européen des brevets

(11) Publication number: 0 388 204 A2

# EUROPEAN PATENT APPLICATION

(21) Application number: 90302789.4

(22) Date of filing: 15.03.90

(51) Int. Cl.5: G06K 19/00, G06K 15/00, G06K 7/10

(30) Priority: 17.03.89 JP 63744/89

(43) Date of publication of application:
19.09.90 Bulletin 90/38

(84) Designated Contracting States:
DE FR GB

(71) Applicant: HITACHI, LTD.
6, Kanda Surugadai 4-chome
Chiyoda-ku, Tokyo 101(JP)

(72) Inventor: Ohyama, Shinji
1736-244 Shirakata, Toukai-mura
Nara-gun, Ibaraki 319-11(JP)

Inventor: Tanaka, Tomoyuki
5-5 Oomika-cho 6-chome
Hitachi-shi, Ibaraki 319-12(JP)
Inventor: Tadauchi, Masaharu
3514 Totsuka-machi, Totsuka-ku
Yokohama-shi, Kanagawa 244(JP)
Inventor: Takasaka, Masahiro
600-43 Kotobuki-cho
Hitachioota-shi, Ibaraki 313(JP)

(74) Representative: Calderbank, Thomas Roger et
al
MEWBURN ELLIS 2 Cursitor Street
London EC4A 1BQ(GB)

(54) Information medium.

(57) A printing medium has information printed thereon in the form of a bit pattern of dots. The arrangement of those dots is determined by an array of dot sites (1a), some of which correspond to information bits (logic "1") and some (1b) to space bits (logic "0"). If ink dots of a small size (e.g. dimensions (Pd) less than 50μm) are printed, there is the risk that the ink will spread so as to make the dots difficult to identify clearly, and hence, make the information difficult to read. Therefore spaces (Ps) are defined between the dot sites, which spaces are large enough (at least 2μm) to prevent liquid ink at one dot site spreading to another dot site. Hence the information is easier to read. Edge markers (2a,2b) may be provided to define the scanning of rows and columns of the dots, and the dots may be printed in more than one colour, or with more than one size or with more than one density, to measure the information thereof.

FIG. 4

EP 0 388 204 A2

# INFORMATION MEDIUM

The present invention relates to an information medium, such as a information card.

It is known to generate an optical memory card using a light-based system. In an article in "Procedings Optical Memory Symposium '85, pages 121 - 126", the recording of data in a pattern on an optical memory card is discussed. In order to generate a suitable relationship between the size of a pixel and the recording dot of a line sensor, an optical memory card requires a reflective part and a non-reflective part.

In US 4634850, the optical memory card has dot sites arranged in cells forming a regularly spaced grid. The optical memory card can then be read by a linear array, with one row of the grid being read at a time. The optical memory card is transported past the reader array, and a mechanical arrangement is used for aligning the reader with the rows of dot sites. In US 4634850, the information medium is an optical memory card in which data is written by a laser which forms pits in the medium.

In the known memory cards discussed above, a special medium has to be used to form the card, so that the array of dot sites may be printed thereon by a laser or other optical system. The present invention, however, seeks to produce a memory card, or other information medium, in which the information is recorded by printing using liquid ink. When liquid ink is printed onto a medium, there is inevitably some spreading of the ink. In traditional printing systems, where the printing is to be viewed by a human observer, this spreading of the ink is sufficiently small to be neglected. However, if the memory card is to record a large amount of data, and is to be read electronically, the dot size should be small. The size will normally be less than 50μm, and normally in the range 20 to 30 μm. With dots in this size, a suitable reader can output a signal with a sufficient signal to noise ratio. However, for such small sized dots of ink, the problem of spreading of the ink becomes more critical.

Therefore, the present invention proposes that the printing of ink to an information medium is controlled in the basis of an array of small dot sites, some of which will have ink printed therein, and others which will correspond to spaces. Then, the array of dot sites is used to control the pattern of ink that will form the bit pattern.

The principal way that that control is achieved is by providing a spacing between the edges of every dot site. This spacing should be selected so as to prevent liquid ink printed to one of the dot sites from spreading to an adjacent dot site, and is normally at least 2μm. It should be noted that the amount of spreading can normally be predicted from knowledge of the ink and the printing medium, and normally the spacing need not be greater than 20μm.

A further development of the present invention concerns the reading of the information. Normally, with the present invention, the small dot sites are arranged in a plurality of rows and columns. If the information medium is then placed in a reader for the medium, it is important that the reader aligns its reading pattern with the rows or columns of the array of dot sites. To assist in this, the present invention proposes that there is an edge pattern adjacent one or more edges of the array. Preferably, such an edge pattern is arranged adjacent opposite edges of the array. That edge pattern may then comprise a series of pattern units, each corresponding to a row or colum, with alternate pattern units arranged adjacent each other, and having an information bit and a space bit, with the information bit and the space bit of adjacent units being alternate. In this way, by scanning the edge patterns, it becomes possible for the reader to align itself with the rows or columns in the array of dot sites.

In further developments of the present invention, the dot sites may be of different dimensions or densities, and part of the bit pattern representing data considered most important may be arranged in a central part of the pattern. Furthermore, reading may be made easier if the ink dots are of two colours, printed on a background base of a third colour. The information medium may further be overprinted with a further information display.

Before discussing the present invention in detail, more should be taken of the difference between dot sites and dots in the present specification. A dot site is a possible location for a dot, and thus the array of dot sites of the information medium is an imaginary array, and does not need physically to be printed on the medium. That array of dot sites, however, controls the pattern of printing of the liquid ink, and that printing generates an actual pattern of dots (bit pattern) on the medium itself.

The present invention also relates to an apparatus for printing such an information medium. In order to print the medium, a printing base is first formed in which a pattern matrix is defined, and then liquid ink is applied to that base corresponding to the pattern matrix. Then, the liquid ink is transferred to the information medium. By determining the arrangement and spacing of the dot sites in the pattern matrix, the arrangement and spacing of the printed dots can be determined.

Again, the ideas of printing the dots with different sizes or densities, or in different colours may also be applied to the apparatus.

The present invention also relates to a reader for reading the above information medium. The reader has means for scanning the medium so as to detect the bit pattern printed thereon, and then the bit pattern can be analysed. When the bit pattern corresponds to recorded data, the reader may also have means for generating a visual and/or audio output corresponding to that data. In this way, information may be transmitted from one site to another by the information medium, and read at that site.

A further aspect of the present invention concerns the printing base. As was mentioned above, an information medium may be printed from a printing base on which there is an array of dot sites and that printing base may thus be formed so that the pattern matrix thereof has a spacing between the dot sites, so that a corresponding spacing will be generated on the information medium.

Such a printing base may be generated by an etching process in which a resist layer is formed on a data layer of the printing base. The resist layer is exposed to radiation to define an exposure pattern, and so form a resist pattern corresponding to the exposure pattern. Then the data layer of the printing base is etched through the resist pattern. The spacing of the etching will be controlled in order to achieve the advantages of the present invention discussed above. Such a printing base may then be used in a method of printing an information medium, as discussed above.

A further development of the present invention concerns the generation of printed information. If the original data is in digital form, that data may be converted to a pattern matrix corresponding to dot sites, and then liquid ink printed on the information medium so as to reproduce a bit pattern corresponding to the pattern matrix, and therefore to the original information. If the original information is then in analogue form, the analogue information may first be converted to digital information.

This development of the present invention permits the provision of an information distribution system, in which information is recorded and printed using the present invention. A multiplicity of cards (e.g. postcards) may then be generated each carrying the same information, and then those cards may be distributed. If the receivers of the card have a suitable reader, the information printed on the cards may be displayed.

Embodiments of the present invention will now be described in detail, by way of example, with reference to the accompanying drawings in which:

Figs. 1 and 2 show the generation of a printing medium being a first embodiment of the present invention;

Fig. 3 shows an apparatus for reading the printing medium of the first embodiment of the present invention.

Fig. 4 shows an edge pattern for use on a printing medium according to the present invention;

Fig. 5 shows the reading of a printing medium;

Fig. 6 shows the pattern of another embodiment of the present invention;

Figs. 7 to 9 show edge patterns which may be used in embodiments of the present invention;

Figs. 10 to 12 show further embodiments of the present invention with different information patterns respectively;

Fig. 13 shows a postcard being a printing medium according to the present invention;

Fig. 14 shows a business card being a printing medium according to the present invention;

Fig. 15 shows an embodiment of the present invention in which a protective sheet is applied to the printing medium;

Figs. 17 and 18 shows alternative patterns for arranging the printing of ink dots in a printing medium according to the present invention;

Fig. 18 shows the overprinting of a printing medium according to the present invention;

Figs. 19 and 20 show further examples of a postcard being a printing medium according to the present invention.

Fig. 21 shows a reader for an information medium according to the present invention, being in the form of a telephone hand set;

Fig. 22 shows another reader for an information medium according to the present invention being in the form of an electronic book;

Fig. 23 shows as electronic cooker containing a reader for an information medium according to the present invention;

Fig. 24 shows a reader for an information medium according to the present invention having a visual display;

Fig. 25 shows a reader for an information medium according to the present invention, being a television system;

Fig. 26 is a schematic diagram of a printer for printing an information medium according to the present invention;

Fig. 27 shows schematically the formation of a printing base according to the present invention; and

Fig. 28 shows the distribution of information using a printing medium according to the present invention.

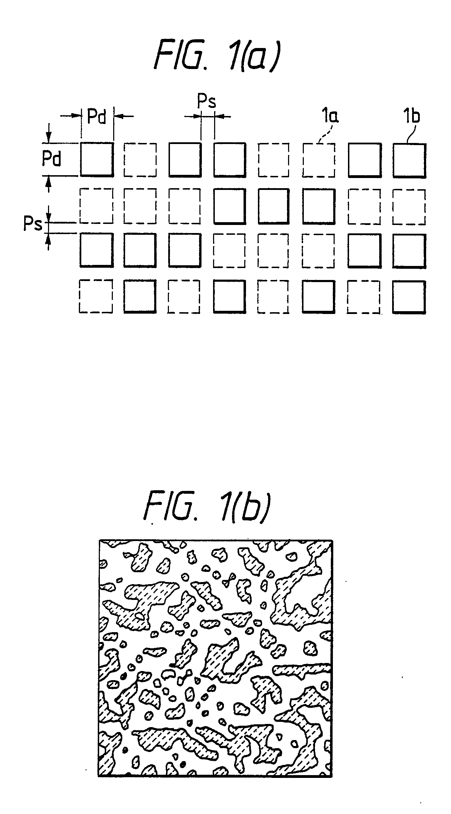

A first embodiment of the invention will now be described with reference to Fig. 1.

As shown in Fig. 1(a) an array of recording bits (dot sites) are defined on a flexible sheet (information medium). Fig. 1(a) shows that the recording bits 1a,1b have a with Pd and a spacing Ps therebetween. Recording bits 1a and 1b correspond respectively to digital signals "0" and "1" (or "1" and "0") (information bits and space bits respectively). The width Pd depends on the printing mode, kind of printing ink, and recording sheet material. For example, the width may be 20 to 30 μm when printing is by offset printing with oxidized polymer type ink using carbon black as the pigment, and art paper as the recording paper.

Furthermore, the recording bits are made substantially uniform over the sheet, thereby reducing the risk of reproduction errors.

Since liquid ink has a surface tension, when a print plate with ink attached to it is applied to a printing medium, the ink normally spreads out into round forms. When a tiny square dot e.g. corresponding to the recording bit 1a is recorded, each corner is thus inevitably rounded. To reduce the deformation, the recording dot must be rounded. Thus the ink spreads out and, as shown in Fig. 1(b), if no space Ps is provided between the recording bits 1a, single ink dots are reproduced relatively clearly. However, when several ink dots corresponding to recording bits 1a are adjacent, the ink spreads so that the bit patterns are deformed, and reading to the dots is difficult.

Therefore, if the space Ps between the recording bits is set at 2 to 5 μm, spreading of ink from one dot does not interfere with sny other dot. If the information medium is then read with a main scan from the left to the right and a sub scan moves from the top to the bottom, deformation of the dots due to spreading of the ink is uniform in the main scan and sub scan directions. Hence it is preferable that the spacing Ps in the directions of the main scan and the sub scan are identical.

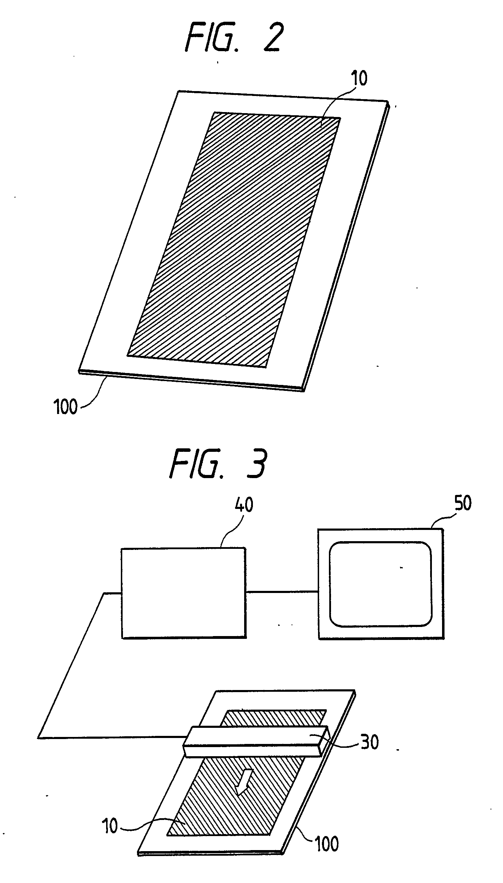

As shown in Fig. 2 assuming that a dot pattern (10) is formed on a sheet (100) of a post card size by offset printing with a recording bit size Pd = 25 μm, and a space Ps = 5 μm, about 1 megabyte capacity of information can be recorded.

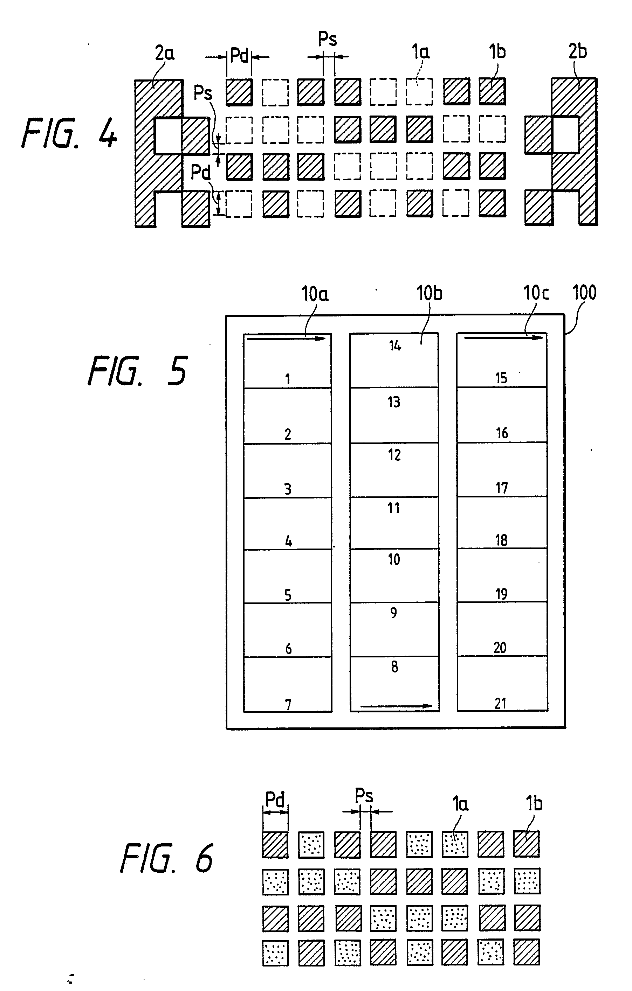

As shown in Fig. 3, the information medium may be read by a reader having a line sensor 30 which scans the dot pattern 1 on a sheet 101 on which an image and acoustic information are recorded by a bit pattern of dots of ink. Then a reproducing circuit 40 reproduces an image signal or an acoustic signal which is output through a display 50.

Figure 4 shows a second embodiment of the invention. In Fig. 4, recording bits 1 correspond to regions for printing dots representing digitized data if acoustic or visual information. A marker 2 is used for scanning the data in sequence. As shown, edge markers 2a,2b may be provided on the right and left edges or the top and bottom edges. When the recording bits are arranged horizontally, the edge markers extend vertically and when the recording bits are arranged vertically, the edge markers 2a, 2b extend horizontally.

For example, assume that the edge markers extend vertically, as shown in Fig. 4. A sensor having small cells photo-electrically converts the dot pattern. The resulting pattern is digitised and arranged in a two-dimensional manner in a memory. This processing results in providing something substantially the same as the recording pattern, except in respect of quantization in cell size.

As shown in Fig. 4a, the edge markers 2a, 2b have a series of units corresponding to the rows of the array of recording bits 1a,1b. Each unit has a pair of cells corresponding to a logic "1" and a logic "0" arranged in the row direction (X direction) then the units are arranged in the column direction (Y direction) with the pair of cells arranged alternately. Thus, the visual appearance is of a "comb like" edge marker with the comb being formed by the projecting logic "1" bits of alternate units in the column direction.

When information corresponding to the array is stored in a memory, information of the right and left markers 2a, 2b is read out. When an address advances in the Y direction, black and white (i.e. logic "1" and logic "0") alternately appear, but when an address advances in the X direction, either white (logic "0") or black (logic "1") appears. Because of these features of the comb-like markers 2a,2b, marker poitions in the memory can be obtained. The data is located at a specific coordinate between the positions of addresses of the right and left edge markers 2a, 2b. Hence the data can be rewritten to an addres coordinate.

The comb-like edge markers 2a,2b allow the orientation of a row of data line to be determined; that is, on an odd line or even line. To determine the number of lines, it is necessary to count-up each time one line is moved, from the top line. Since the comb-like edge markers 2a,2b are on the right and left edges of the data, it is possible to draw a virtual line connecting the two markers on the same line and presume a data recording position based on the comb positions on the right and left edges when information is reproduced. This method makes possible precise reproduction of the recorded data. Thus, a reader of the information medium can correctly determine the orientation of the rows of data from the edge markers even when the information medium is slightly mis-aligned with the direction of scanning of the reader.

Fig. 5 shows a further embodiment of the invention in which dot patterns 10a to 10c are printed on a sheet 100. The recorded information is divided into 21 blocks. The blocks may be divided depending on the capacity or divided to give equal content of the information. As shown, the blocks are arrange in three columns. The data blocks in the first and third columns are sequentially arranged from the top to the bottom, and those in the second column are arranged from the bottom to the top. Any row in the information system is arranged from the left to the right. By employing data arranged as show in in Fig. 5, a line sensor 30 having one third the width of a sheet 101 is required to scan the sheet 101 longitudinally several times. In this case, however, since it is unnecessary to return the reading sensor to the top line when the sensor shifts from the first column 10a to the second column 10b, no waiting time for reproduction is generated. Reading of such data requires mechanical scanning to an accuracy of a few μm. Hence, a motor enabling such scanning (for example, a stepping motor) requires considerable time even when moving at top speed. This would result in a waiting period if the scanning had to shift from the bottom to the top time.

Figure 6 shows an example of the present invention on which the recording bits 1a, 1b in Fig. 1 are printed so the dots are coloured in more than one colour. For example, when the colour of the sheet of the information medium is white, a recording bit 1a may be coloured with red ink, and a recording bit 1b coloured with blue ink. The information bits are respectively allocated to logic "0" and logic "1". As a result, the use of a colour sensor enables the recorded information to be easily reproduced. Using a red optical filter, the photoelectrically convered signal level is such that blue matches to high, white matches to middle, and red matches to low. By assuming the middle level voltage matching to white as a threshold value and digitizing the voltage, the recording information is easily determined as logic "0" or logic "1". The space area causes a voltage of signal level matching to white inevitably to be produced between the recording information at logic "0" and logic "1" so that it is easy to deal with fluctuations of a threshold value level.

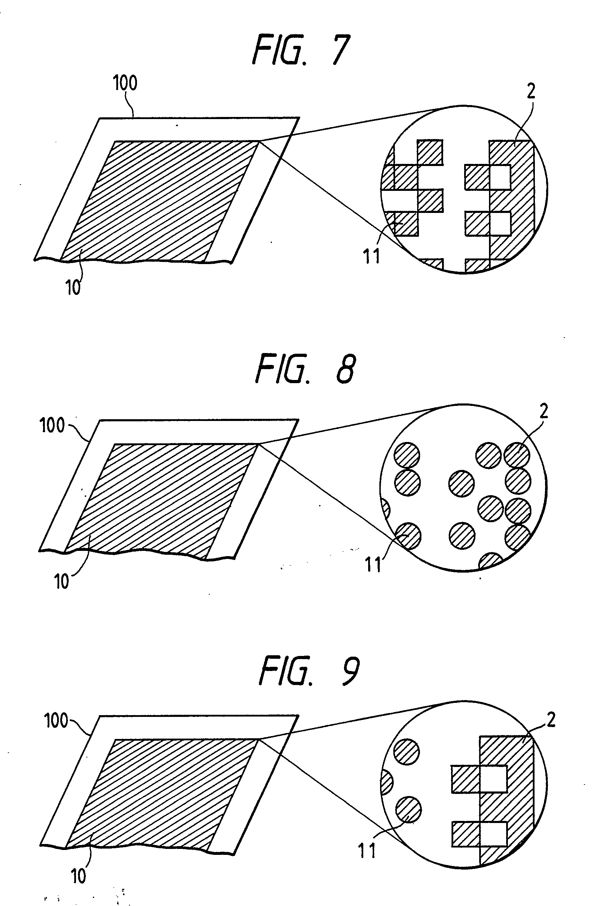

Figures 7 to 9 show examples of the present invention where the shapes of information recording dots and edge markers are varied. In Fig. 7, information data (ink dots) 11 and an edgemarker 20 are respectively formed by a square dot pattern. By forming a recording pattern with four square dots, the reproducing system can easily detect a line edge, thereby reducing reading erros. In Fig. 8 information data (ink dots) 11 and an edge marker 20 are respectively formed by a round dot pattern. When a small dot is formed by printing, there is advantage in round patterns for forming a minute pattern because of the ink's surface tension. In Fig. 9, the data is formed by a round pattern, and the edge marker 20 is formed by a square pattern. A round pattern enables printing of a small dot, and the square edge marker 20 is used for reproduction, thereby reducing reproduction errors. This is because the photoelectric sensor for scanning the dots is generally a linear sensor such a s CCD line sensor, so that it is possible easily to locate the position of a diagram consisting of straight lines. However, border positions of a diagram consisting of curves cannot be located precisely. Hence, it is most efficient to employ a square edge marker for determining precisely the border position and a round marker for determining a coordinate.

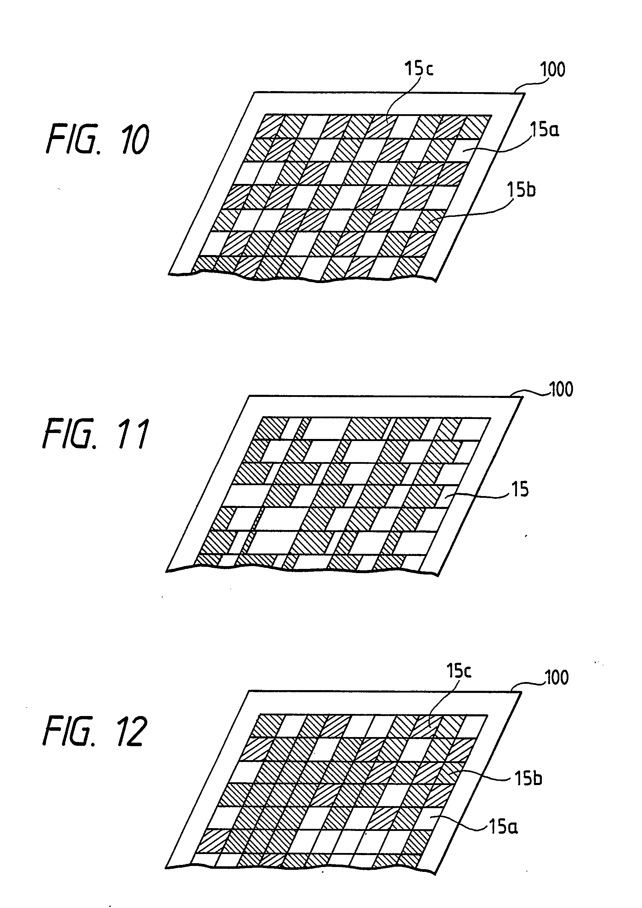

Figures 10 to 12 show examples of the present invention in which analogue information is recorded. In Fig. 10, the colours of the dot pattern recorded on a card 100 are indicated at 15a to 15c according to the amount of recorded analog information. For example, a, b and c respectively denote red, green, blue. Intermediate colours between the respective colours can be used to represent analog information. Further, intermediate values (analog value) may be represented by the intermediate colours. For example when eight colours -- red, light purple, green, dark purple, light blue, dark blue, yellow, orange and black -- are used, they can be read by a colour sensor. This recording method can read eight times as much information as a method in which information is recorded digitally as white spaces and black dots.

As shown in Fig. 11 the analog amount may be represented by the length and size of the printed dots 15. For example when an area corresponding to 1 bit in the digital recording is divided into 8 blocks, an area corresponding to 1/8 bit is recorded as a unit, and the voltage levels 1 to 8 are recorded according to the area, and are reproduced. This method enables eight times as much information to be recorded as in digital recording. Hence, it can record more information than a digital recording method on the same signal card 100.

As shown in Fig. 12, the analogue amount may be represented on a card 100 according to the density of the recording pattern (schematically shown as areas 15a to 15c). Eight density levels may be used, which then correspond to voltage levels 1 to 8. The eight density levels can then be determined in the reproduction device (reader). Hence the recording method can record eight times as much information as a one-dot-to-one-bit allocation method.

Thus, a recording method which record the information in analogue form can record more information than digital recording.

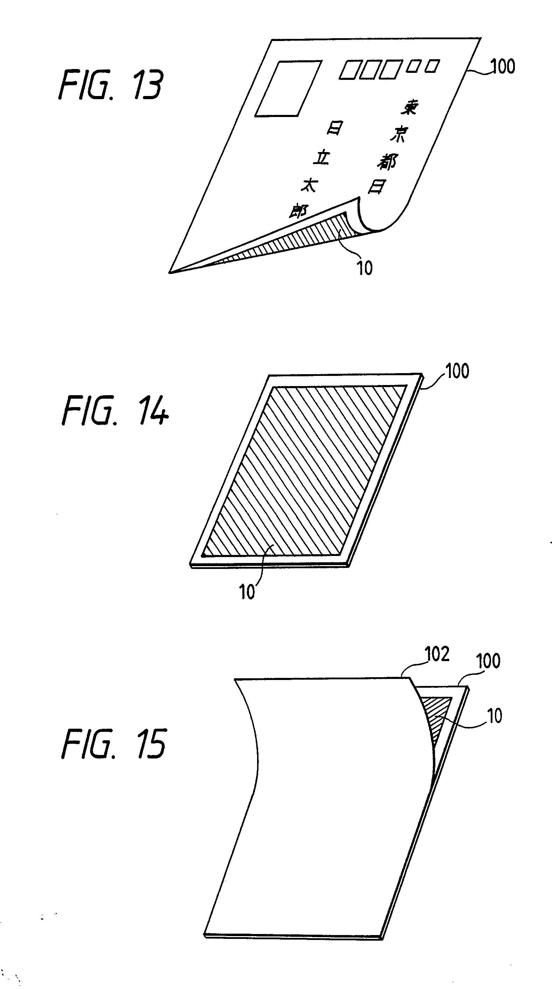

Figures 13 and 14 show examples of the present invention in which a postcard or business card is used as the recording medium. By using a postcard as a recording medium and printing as shown in Fig. 1, it is possible to transmit one to ten megabytes of information at low cost and in large quantities. By using a business card as a recording medium, it is possible to record a telephone number or an address on a part of the business card.

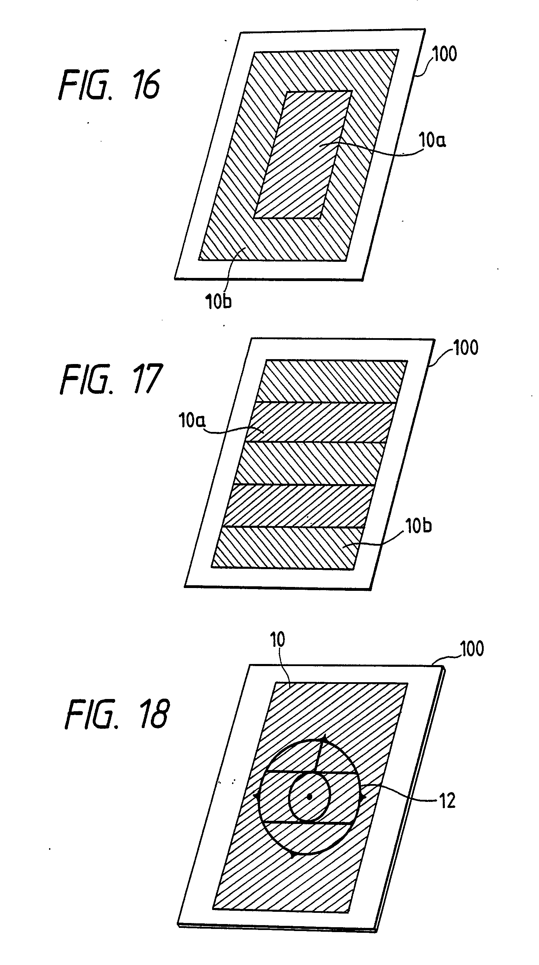

Figure 15 shows an example of the present invention in which a protective sheet is affixed to the recording medium. Information transmission using a postcard as shown in Fig. 13 may soil the information recording surface. A protective sheet 102 may be applied to the card 100 and serves to protect the dot pattern 10. In reproducing information, the protective sheet 102 is stripped off so as to allow reading errors to be reduced.

Figures 16 and 17 show a recording method for ensuring accurate information reproduction. If the information to be conveyed contains significant items, such as amount of money, numbers, as shown in Fig. 16, reading errors can be reduced by recording the information on the central portion of the card, which may be free from dirt caused during handling. Likewise, as shown in Fig. 17, by recording important information in a larger dot size than other dots with the dot pattern of larger dots being shown at 10a, it is possible to reduce reading errors. Enlarging the dot size increases the redundancy of information, as the dot falls on many cells of a photoelectric reader.

Fig. 18 shows an example where a visible image to be visually recognised is recorded onto the background of a dot pattern. The dot pattern 10 recorded on the sheet 100 can be reproduced only be a reproducing device. A visible image 12 can be recognised by the naked eye and has a colour and density which have no effect on the reproduction of the dot pattern.

By recording a company name or a symbol name as the visible image 12, the sender of the information can be determined without recourse to a special reproducing device.

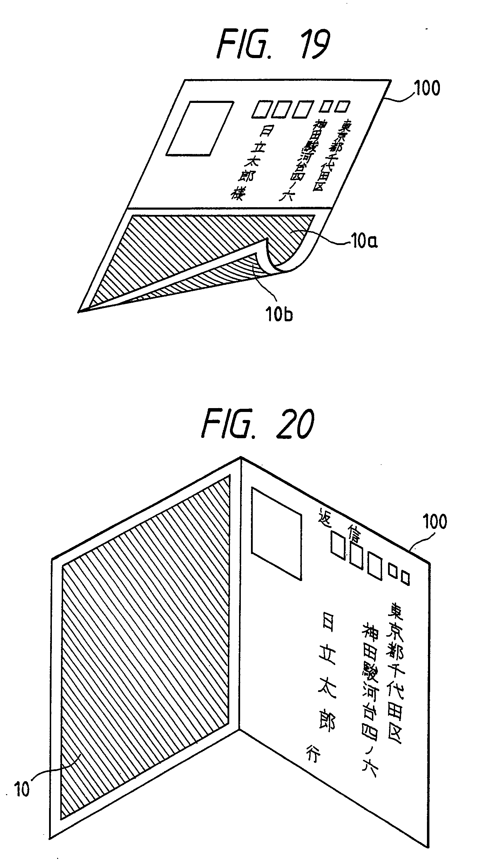

Figures 19 and 20 show examples of the present invention in which information is recorded on a postcard. The example shown in Figure 19 is capable of recording 1.5 times as much information as the method for recording information on a normal communication surface. This is because the former record information on a communication surface and on the lower half of the address surface.

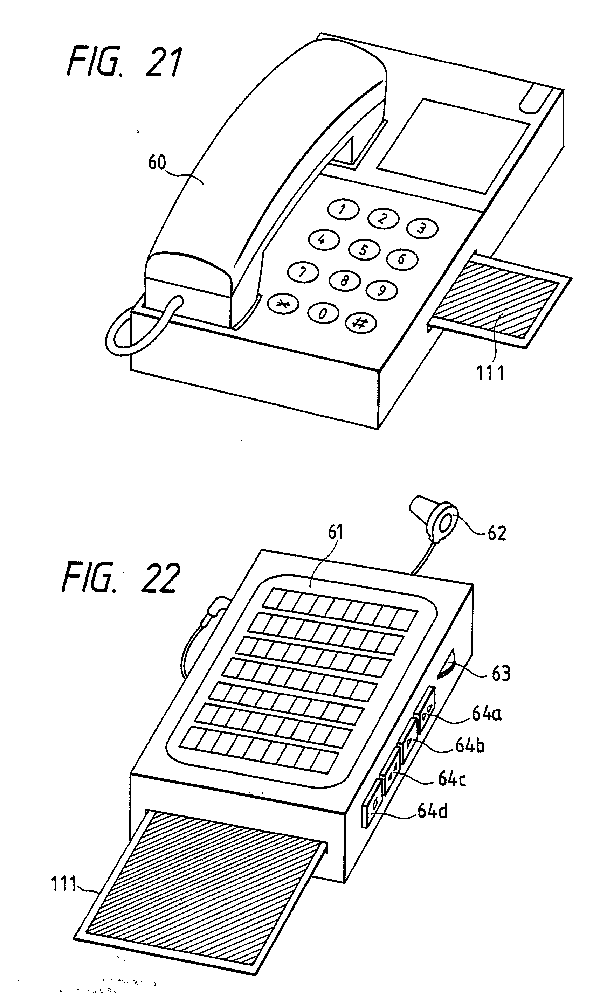

Figures 21 to 25 show examples of use of an information medium according to the invention.

Figure 21 is an example in which the present invention is applied to a reader in the form of a telephone for reproducing a phone number recorded on a business-card-sized sheet memory 111 and automatically dialing a phone number. In Figure 21, the reader includes a telephone receiver 60, a display 61 and a sheet memory 111. The sheet memory 111 records coded data such as private and business telephone numbers on a part of a business card, as shown in Fig. 14. When the receiver 60 is picked up and the sheet memory 111 is inserted into the reader, the recorded information is reproduced. The display 61 indicates the name of called party. The phone is connected depending on the read coded information and the caller can speak without searching for the phone number and dialing.

Figure 22 shows an example in which the present invention is applied to a reader in the form of an electronic book that indicates data corresponding to newspapers, weekly magazines, or books. This information is recorded on a sheet memory 111, displayed on a display 61 and reproduces an as an audible tone from an ear phone 62. In Fig. 22 the reader includes the display 61, the ear phone 62, a volume control 63, a quick feed button 64a, a reproducing button 64b, a rewind button 64c and a stop button 64c. The sheet memory 111 stores characters and picture of newspapers, weekly magazines and blocks. The system reads the information recorded on the sheet memory 111 and displays the characters (words) on the display 61. The represented character may be read by an operator or the read-out information is voice-synthesized and then output as a voice through earphone 62. Alternatively, the system may record a voice signal on the sheet memory 111, reproduce it, and output the resulting signal through the ear phone 62. As soon as the voice is output through the ear phone 62, an image may be output on the display 61. The reproducing button 64 is used for starting reproduction of the data on the sheet memory 111 the stop button 64d is used for stopping reproruction, the quick feed button 64a and the rewind button 64c are used for retrieving the contents of the data, and the volume dial 63 is used for adjusting the volume of the voice output.

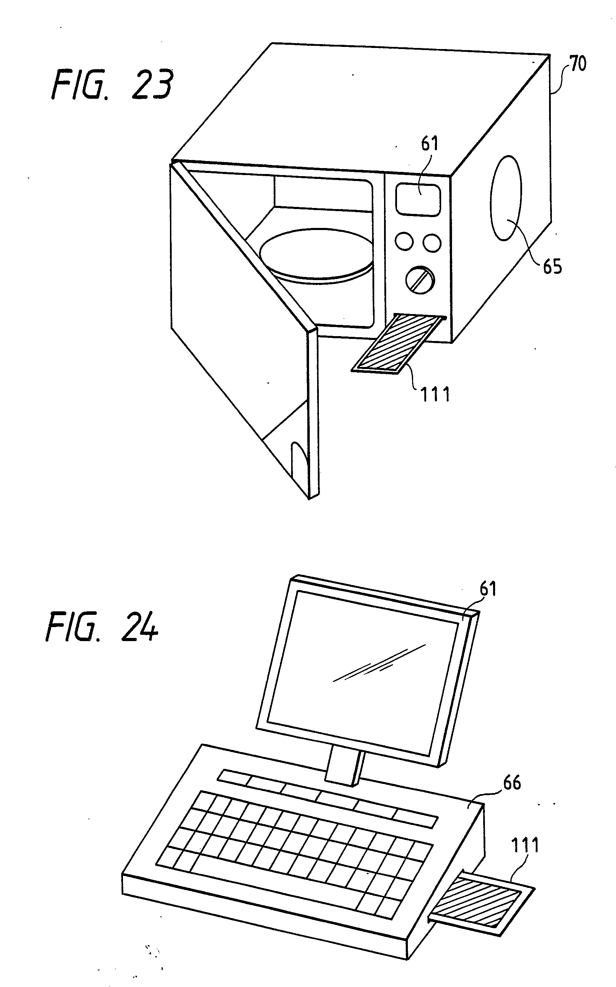

Figure 23 shows an example in which the present invention is used in an automatic electronic cooker (e.g. microwave oven). The cooker reads cooking data recorded on a sheet memory 111 and uses the instructions to perform automatic cooking. The electronic cooker 70 includes a display 61 and a speaker 65 both of which are information output units. The sheet memory 111 stores cooking data such as heating time, temperature, and the cooking process. The data is represented on the display 61 and is read out by the speaker 65. The use of the sheet memory 111 can protect information from damage by the electromagnetic waves leaking from the electronic cooker unlike magnetic or IC memories. Hence, information is accurately reproduced. The cooking process is represented on the display 61 and is read out by the speaker. This allows the cook to watch or listen to the cooling process while the cook cooks another dish. Unlike a cook book, the cooking process is stored on the sheet memory as control information for the electronic cooker, so the cook can cook without reading the book.

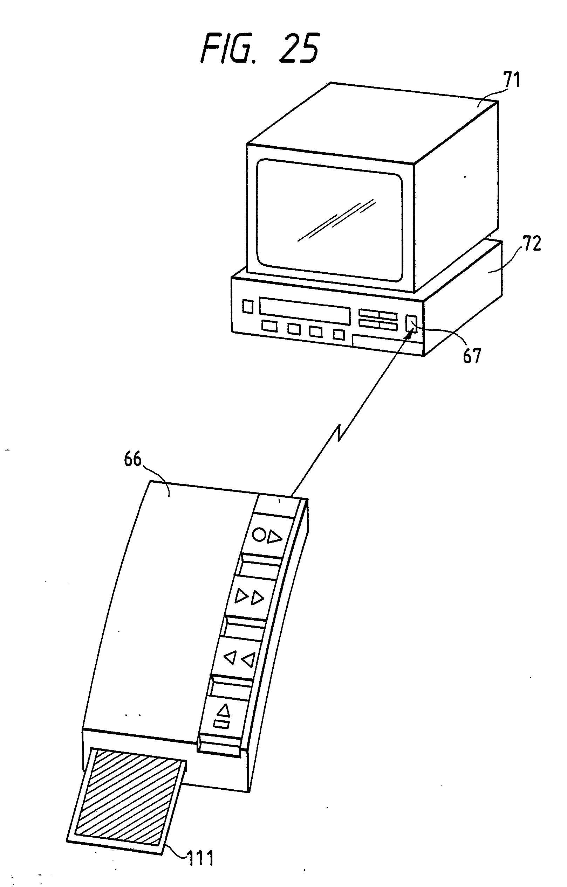

Figure 25 shows an example where a sheet memory 111 is used to convey data or a program of a personal computer or a word procesor. This embodiment makes it possible to copy larger quantities of data more rapidly than a floppy disk. and to include the data in a magazine or the like. When a dictionary and a dictionary registering additional characters of a word processor are changed, the newly-printed sheet memory 111 may be delivered by mail. Hence, it costs less than a floppy disk. Likewise, a word processor system program can easily be changed.

Figure 25 shows an embodiment in which a remote controller for a TV set is integrated with a reproducing unit. The embodiment is designed to send the information stored in a sheet memory 111 from a controller 66 to the television 71 through a light reception window using infrared rays. This is done to select a TV program according to the program stored in the sheet memory 111 and/or to record it on a VTR T2. This embodiment makes it possible to copy larger quantities of information more rapidly than using floppy disks, and to include the information into a magazine for example.

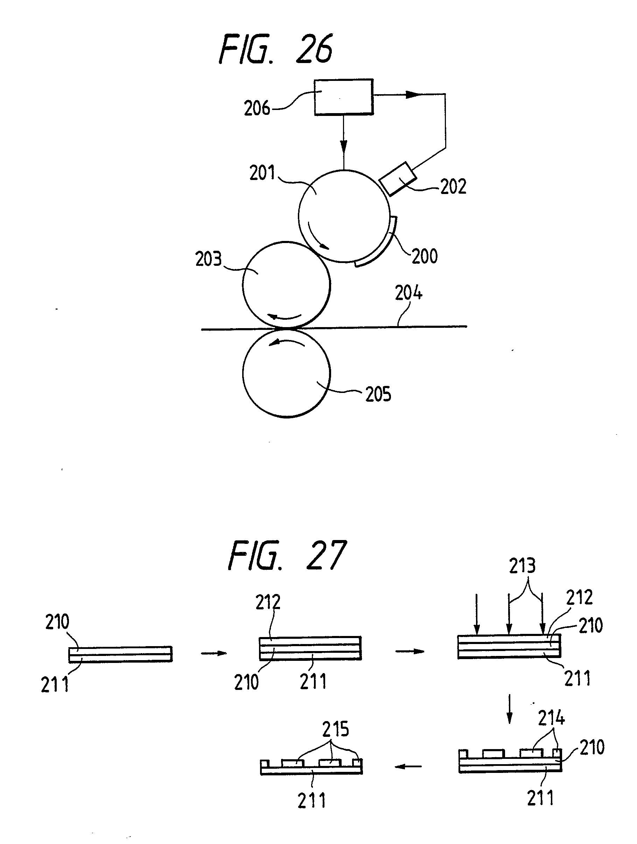

Fig. 26 illustrates the printing of an information medium according to the present invention. First, a printing base 200 is formed, on which a pattern matrix is defined, with that pattern matrix having dot sites that will correspond to the dots to be printed on the information medium. The formation of such a printing base 200 will be described later. Fig. 26 shows printing using an off-set arrangement in which the printing base 20 is mounted on a printing cylinder 201. As the printing cylinder 201 rotates, the printing base 200 passes an inking unit 202 to receive ink therefrom. Then, the printing base 20 is applied to a blanket cylinder 203, and that blanket cylinder 203 transfers the printed pattern to a sheet 204 of the information medium. In order to provide a suitable pressure surface, a further cylinder 205 is provided on the opposite side of the sheet 204 from the blanket cylinder 203. The inking and cylinder operation is controlled by a suitable control device 206. Since offset printing is, in itself, a known technique, further details of the printing system shown in Fig. 26 will not be described. Furthermore, a person skilled in the art will immediately appreciate that other printing methods may be used.

Referring to Fig. 27, a printing base is formed by first creating a data layer 210 on a backing sheet 211. Then, a layer 212 of resist is formed on the data layer 210. Radiation 213 is then caused to be incident on the resist layer 212 in a predetermined pattern, so as to expose the resist layer 212.

Development of the resist layer 212, after exposure to the radiation 213, results in a resist pattern 214 being formed on the data layer 210. Then, by using the resist pattern 214 as a mask, the data layer 210 can be etched so that a pattern 215 is formed in the data layer. That pattern may then be used for printing as was described above. Again, such a method of etching is known, in itself and will not be described further.

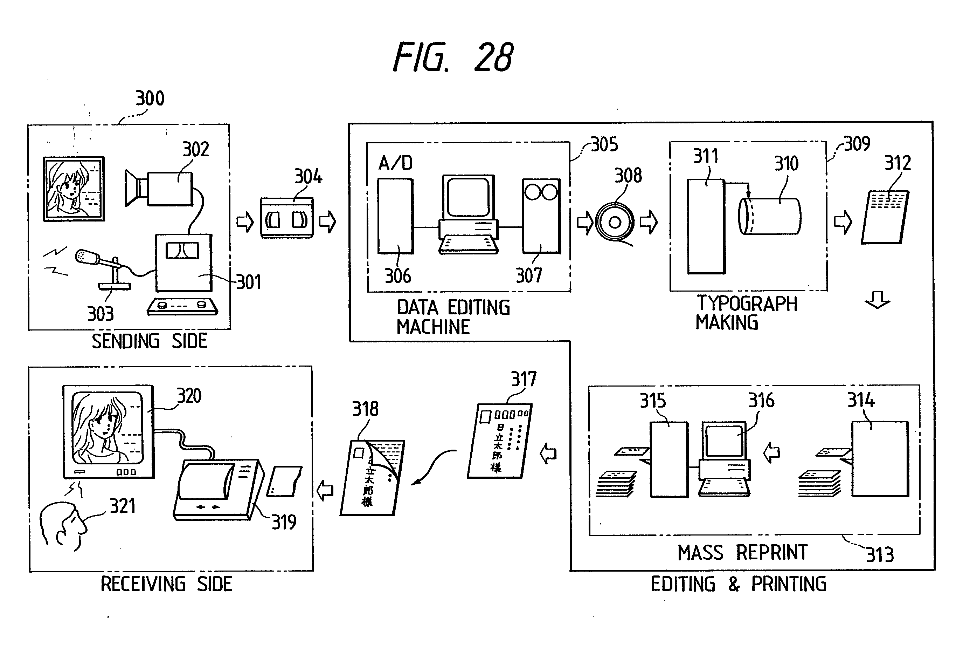

Fig. 28 shows the application of the present invention to the distribution of information. First, the information is recorded. As shown at 300 in Fig. 28, the recording process involves recording via a recording device 301 both visual information using a camera 302 and sound information using a microphone 303. That information may be recorded in analogue form on a suitable tape. That tape 304 is then transmitted to a conversion process 305 in which an analogue to digital converter 306 converts the data on the tape 304 and that digital data is reproduced on a further tape by a reproduction device 307. The tape 308 thus formed is then transmitted to a first reproduction step 309.

It can be observed that, if the tape 304 contains information recorded in digital form, the conversion step 305 may be omitted.

The first printing step 309 corresponds to the process shown in Fig. 27; in which a printing base (typograph) is formed. The printing base 310 is etched using a suitable etching source 311, e.g. an electron-beam source to generate radiation, and the result is a printing base 312. That printing base 312 is then transmitted to a second printing step 313 in which a plurality of sheets of information medium are printed by a suitable printer 314 using e.g. an off set printing method as shown in Fig. 26.

If the information medium is in postcard form, the postcards may then be addressed using a address printer 315, the addresses being obtained from a computer database 316. The resulting postcards 317 are distributed by the normal post service and, as shown at 318, have information printed thereon in the form of dots. For a standard postcard size, up to one megabyte of information may be recorded, corresponding to 10 full colour pictures and 3 minutes of sound. On reception by the user, the card 318 is read by a suitable reader 319, and the information may be reproduced by a suitable display 320 such as a television. Thus, the user 321 may see what has been recorded at the recording step 300.

Thus according to the present invention, a printed sheet memory can suppress the adverse effect of spreading of ink causing the deformation of dot patterns. The recording and reproduction errors are decreased since the signal noise is reduced, when read by the reproduction device (reader).

The invention may divide the information area into a plurality of blocks, locate them in a two-dimensional manner, range odd column blocks from top to bottom and even column blocks from bottom to top, and read the blocks in sequence. Hence the invention can reduce the waiting time corresponding to the moving time of a sheet feeder in moving from an odd column to an even column block or vice versa.

According to the present invention, a recording dot may be round so that deformation of the shape of the dot can be input to a minimum. When printing dots of 30μm for example, a printing accuracy of less or less is not required, so printing is relatively easy, using the present invention.

According to the present invention, information may be recorded in analogue form by varying the dot size, position or colour tone. Hence, the use of an eight-fold analogue record enables recording of eight times as mch information as recording information in digital form.

According to the invention, an image to be visually recognized may be recorded on the background of the dot patterns. Hence, the content of the information can be read without recourse to an information reproducing device.

According to the invention, by colouring the dots in two colour inks different from the colour of the background corresponding logic bits 1 and 0, and providing a complementary colour from the light source of the reproducing device, or reading a medium printed on a transparent base by white ink with a photoelectric converting element, it is possible to obtain a signal with a excellent S/N ration.

According to the invention, by recording significant information on the central portion of the paper or in larger dots, it is possible to ensure satisfactory information transmission.

## Claims

1. An information medium having a bit pattern printed thereon, a plurality of small dot sites in an array of dot sites being defined on the medium, some of the dot sites corresponding to information bits and others corresponding to space bits; characterised in that:
there is ink in a liquid form printed to each of the dot sites corresponding to information bits and spaces corresponding to said space bits, such as to form a bit pattern on the card, the array of dot sites being such as to control the pattern of the ink forming the bit pattern.

2. An information medium according to claim 1 wherein the dimensions of each dot site are less than 50μm.

3. An information medium according to claim 1 or claim 2, wherein the array of dot sites has a spacing between the edges of every dot site thereof.

4. An information medium according to claim 3, wherein the spacing is selected so as to prevent liquid ink printed to one of the dot sites from spreading to an adjacent dot site.

5. An information medium according to claim 3 or claim 4, wherein the spacing is at least 2μm.

6. An information medium according to any one of claims 3 to 5, wherein the spacing is not more than 20μm.

7. An information medium according to any one of the preceding claims, wherein the dot sites of the array comprise a plurality of rows and columns, and there is an edge pattern adjacent one edge of the array.

8. An information medium according to claim 7, wherein the edge pattern comprises a plurality of pattern units, each pattern unit having an information bit and an adjacent space bit, and each pattern corresponding to one of the rows or columns, the pattern units being arranged adjacent each other with the information bit and space bit being arranged alternately in adjacent pattern units.

9. An information medium according to any one of the preceding claims, wherein the bit pattern represents a plurality of data, and data which is considered most important corresponds to a central part of the bit pattern.

10. An information medium according to any one of the preceding claims, wherein the plurality of dot sites comprise first dot sites and second dot sites, wherein at least a dimension of said first dot sites is larger than the corresponding dimension of said second dot sites.

11. An information medium according to claim 10, wherein the dimensions of each of said second dot sites are each less then 50μm.

12. An information medium according to any one of the preceding claims, wherein the medium has a base of a first colour, and the ink dots are of at least second and third colours.

13. An information medium according to any one of the preceding claims, wherein the density of the ink at some of the dot sites corresponding to information bits is different from the density of the ink at others of the dot sites corresponding to information sites.

14. An information medium according to any one of the preceding claims wherein the bit pattern is overprinted with a further information display.

15. An apparatus for printing an information medium comprising:
printing base means defining a pattern matrix, said matrix comprising a plurality of small dot sites in an array, some of said dot sites corresponding to information bits and others corresponding to space bits;

inking means for applying liquid ink to said some of said dot sites of said base means, and

transfer means for transferring liquid ink to said information medium so as to print a bit pattern on said information medium, corresponding to said pattern matrix, said bit pattern having ink dots corresponding to said information bits and spaces corresponding to said space bits;

wherein the array of dot sites is such as to control the pattern of the ink forming the bit pattern.

16. An apparatus according to claim 15, wherein the pattern matrix has a spacing between the edges of every dot site thereof.

17. An apparatus according to claim 16, wherein the dimensions of each said dot site are each less than 50µm.

18. An apparatus according to any one of claims 15 to 17 wherein said plurality of small dot sites comprise first dot sites and second dot sites, wherein at least one dimension of said first dot sites is larger than the corresponding dimension of said second dot sites, and said transfer means is arranged to transfer liquid ink so as to generate ink dots of different sizes at said first dot sites and said second dot sites respectively.

19. An apparatus according to any one of claims 15 to 18, wherein said information medium has a base of a first colour and said transfer means is arranged to transfer liquid ink of second and third colours to generate ink dots of said second and third colours.

20. An apparatus according to any one of claims 15 to 19, wherein said transfer means is arranged to transfer liquid ink such that the density of said ink of some of said ink dots is different from the density of said ink of others of said ink dots.

21. The combination of an information medium according to any one of claims 1 to 14 and a reader for the information medium, the reader having means for scanning the medium so as to detect the bit pattern, and means for analysing the bit pattern.

22. A combination according to claim 21, wherein the bit pattern corresponds to recorded data, and the reader also has means for generating a visual and/or audio output corresponding to that data.

23. A printing base having a pattern matrix, said pattern matrix having a plurality of small dot sites in an array of said dot sites, some of said dot sites corresponding to information bits and others of said dot sites corresponding to space bits, wherein said pattern matrix has a spacing between the edges of every dot site thereof.

24. A printing base according to claim 23, wherein the dimensions of each said dot site are each less than 50 µm.

25. An apparatus for generating a printing base said printing base having a data layer thereon; the apparatus comprising:

means for forming a resist layer on said data layer of said printing base;

means for exposing said resist layer to radiation so as to define an exposure pattern thereon;

means for developing said resist layer to form a resist pattern corresponding to said exposure pattern;

means for etching said data layer through the resist pattern, thereby to form a pattern matrix in said data layer; and

means for controlling said means for exposing said resist layer such that said pattern matrix comprises a plurality of small dot site in an array, some of said dot sites corresponding to information bits and others corresponding to space bits, and the pattern matrix has a spacing between the edges of every dot site thereof.

26. A method of printing an information medium comprising:

defining a pattern matrix on a printing base, said matrix comprising a plurality of small dot sites on an array, some of said dot sites corresponding to information bits and others corresponding to space bits;

applying liquid ink to said some of said dot sites of said base means;

transferring liquid ink to said information medium so as to print a bit pattern on said information medium, corresponding to said pattern matrix, said bit patterns having ink dots corresponding to said information bits and spaces corresponding to said space bits;

wherein the array of dot sites is arranged such as to control the pattern of ink forming the bit pattern.

27. A method of generating a printing base, said printing base having a data layer thereon; the method comprising:

forming a resist layer on said data layer of said printing base;

exposing said resist layer to radiation so as to define an exposure pattern thereon;

etching said data layer through said resist pattern, thereby to form a pattern matrix in said data layer such that said pattern matrix comprises a plurality of small dot sites in an array, some of said dot sites corresponding to information bits an others corresponding to space bits, and the pattern matrix has a spaing between the edges of every dot site thereof.

28. A method of generating an information medium comprising:

generating a printing base by the method of claims 27; and

printing an information medium by the method of claim 26, using said printing base.

29. A method of generating printed information medium from a digital signal, comprising:
converting the signal to a pattern matrix representing the signal, the pattern matrix comprising a plurality of small dot sites in an array, some of the dot sites corresponding to information bits and others corresponding to space bits, whereby the information bits and the space bits correspond to the digital signal; and
printing liquid ink on the information medium so as to reproduce thereon a bit pattern corresponding to the pattern matrix, the bit pattern having ink dots corresponding to the information bits and spaces corresponding to the space bits.

30. A method of generating a printed information medium from an analogue signal comprising converting the analogue signal to a digital signal and generating the printed medium therefrom according to the method of claim 29.

# FIG. 1(a)

# FIG. 1(b)

FIG. 2

FIG. 3

FIG. 4

FIG. 5

FIG. 6

## FIG. 7

100

2

10

11

## FIG. 8

100

2

10

11

## FIG. 9

100

2

10

11

FIG. 10

FIG. 11

FIG. 12

FIG. 13

東京都 日立太郎 日

100

10

FIG. 14

100

10

FIG. 15

102 100

10

FIG. 16

FIG. 17

FIG. 18

# *FIG. 19*

東京都千代田区
神田駿河台四ノ六
日立太郎 様

100

10a

10b

# *FIG. 20*

返信

東京都千代田区
神田駿河台四ノ六
日立太郎 行

100

10

FIG. 21

60

111

FIG. 22

61

62

63

64a

64b

64c

64d

111

*FIG. 23*

*FIG. 24*

# FIG. 25

# FIG. 26

# FIG. 27

FIG. 28

SENDING SIDE

DATA EDITING MACHINE

A/D

TYPOGRAPH MAKING

MASS REPRINT

EDITING & PRINTING

RECEIVING SIDE